# EUROPEAN PATENT SPECIFICATION

(11) **EP 2 558 940 B1**
(45) Date of publication and mention of the grant of the patent: **12.04.2017**
(21) Application number: 11768510.7
(22) Date of filing: 12.04.2011
(51) Int. Cl.: G06F 12/02, G06F 9/52

(54) **THREAD-LOCAL HASH TABLE BASED WRITE BARRIER BUFFERS**
SCHREIBSPERRPUFFER AUF BASIS EINER VERKETTETEN LOKALEN HASH-TABELLE
TAMPONS DE BARRIÈRE D'ÉCRITURE À BASE DE TABLE DE HACHAGE LOCALES DE FIL

(30) Priority: 12.04.2010 US 758068
(43) Date of publication of application: 20.02.2013
(73) Proprietor: Clausal Computing OY, 00380 Helsinki (FI)
(72) Inventor: YLÖNEN, Tatu, FI-02610 Espoo (FI)
(74) Representative: Papula Oy
(86) International application number: PCT/FI2011/050315
(87) International publication number: WO 2011/128507

(56) References cited:
- EP-A1- 0 938 706
- US-A- 5 287 499
- US-A1- 2002 107 667
- US-A1- 2004 123 065
- US-A1- 2009 327 372
- US-A1- 2009 327 372
- US-A1- 2010 057 792
- US-A1- 2010 185 703
- US-B1- 7 340 494
- US-B1- 7 340 494
- US-B1- 7 565 499
- DAVID DETLEFS ET AL: "Garbage-first garbage collection", ISMM 2004 : THE 2004 INTERNATIONAL SYMPOSIUM ON MEMORY MANAGEMENT ; VANCOUVER, BRITISH COLUMBIA, CANADA, OCTOBER 24 - 25, 2004 ; CO-LOCATED WITH OOPSLA 2004, NEW YORK, NY : ACM, US, 24 October 2004 (2004-10-24), pages 37-48, XP008148886, DOI: 10.1145/1029873.1029879 ISBN: 978-1-58113-945-7
- AZATCHI HEZI ET AL: "An on-the-fly mark and sweep garbage collector based on sliding views", 18TH ANNUAL ACM SIGPLAN CONFERENCE ON OBJECT-ORIENTED PROGRAMING, SYSTEMS, LANGUAGES, AND APPLICATIONS(OOPSLA '03), ANAHEIM, CALIFORNIA, USA OCTOBER 26 - 30, 2003; [ACM SIGPLAN NOTICES - SPECIAL ISSUE: PROCEEDINGS OF THE OOPSLA '03 CONFERENCE], ACM,, vol. 38, no. 11, 15 November 2003 (2003-11-15), pages 269-281, XP008162568, DOI: 10.1145/949305.949329 ISBN: 978-1-58113-712-5
- DETLEFS D. ET AL: 'Garbage-first garbage collection' PROCEEDINGS OF THE 4TH INTERNATIONAL SYMPOSIUM ON MEMORY MANAGEMENT, [Online] 2004, pages 37 - 48, XP008148886 Retrieved from the Internet: <URL:http://portal.acm.org/citation.cfm?id= 1029879> [retrieved on 2011-08-09]
- AZATCHI H. ET AL: 'An On-the-Fly Mark and Sweep Garbage Collector Based on Sliding Views' PROCEEDINGS OF THE OOPSLA '03, [Online] 2003, pages 269 - 281, XP008162568 Retrieved from the Internet: <URL:http://citeseerx.ist.psu.edu/viewdoc/s ummary?doi=10.1.1.10.8405> [retrieved on 2011-08-10]

## Description

### TECHNICAL FIELD:

The present invention relates to garbage collection as an automatic memory management method in a computer system, and particularly to the implementation of a write barrier component as part of the garbage collector and application programs. The invention is also applicable to some other uses of write barriers, for example, in distributed systems.

### BACKGROUND OF THE INVENTION:

Garbage collection in computer systems has been studied for about fifty years, and much of the work is summarized in R. Jones and R. Lins: Garbage Collection: Algorithms for Automatic Dynamic Memory Management, Wiley, 1996. Even after the publication of this book, there has been impressive development in the field, primarily driven by commercial interest in Java and other similar virtual machine based programming environments.

The book by Jones & Lins discusses write barriers on a number of pages, including but not limited to 150-153, 165-174, 187-193, 199-200, 214-215, 222-223. Page 174 summarizes the research thus far: "For general purpose hardware, two systems look the most promising: remembered sets with sequential store buffers and card marking."

David Detlefs et al: Garbage-First Garbage Collection, ISMM'04, pp. 37-48, ACM, 2004 describes on p. 38 a modern implementation of a remembered set buffer (RS buffer) as a set of sequences of modified cards. They can use a separate background thread for processing filled RS buffers, or may process them at the start of an evacuation pause. Their system may store the same address multiple times in the RS buffers. Other documents describing various write barrier implementations include Stephen M. Blackburn and Kathryn S. McKinley: In or Out? Putting Write Barriers in Their Place, ISMM'02, pp. 175-184, ACM, 2002; Stephen M. Blackburn and Antony L. Hosking: Barriers: Friend or Foe, ISMM'04, pp. 143-151, ACM, 2004; David Detlefs et al: Concurrent Remembered Set Refinement in Generational Garbage Collection, in USENIX Java VM '02 conference, 2002; Antony L. Hosking et al: A Comparative Performance Evaluation of Write Barrier Implementations, OOPSLA'92, pp. 92-109, ACM, 1992; Pekka P. Pirinen: Barrier techniques for incremental tracing, ISMM'98, pp. 20-25, ACM, 1998; Paul R. Wilson and Thomas G. Moher: A "Card-Marking" Scheme for Controlling Intergenerational References in Generation-Based Garbage Collection on Stock Hardware, ACM SIGPLAN Notices, 24(5):87-92, 1989.

A problem with card marking is that it performs a write to a relatively random location in the card table, and the card table can be very large (for example, in a system with a 64-gigabyte heap and 512 byte cards, the card table requires 128 million entries, each entry typically being a byte). The data structure is large enough that writing to it will frequently involve a TLB miss (TLB is translation lookaside buffer, a relatively small cache used for speeding up the mapping of memory addresses from virtual to physical addresses). The cost of a TLB miss on modern processors is on the order of 1000 instructions (or more if the memory bus is busy; it is typical for many applications to be constrained by memory bandwidth especially in modern multi-core systems). Thus, even though the card marking write barrier is conceptually very simple and involves very few instructions, the relatively frequent TLB misses with large memories actually make it rather expensive. The relatively large card table data structures also compete for cache space (particularly TLB cache space) with application data, thus reducing the cache hit rate for application data and reducing the performance of applications in ways that are very difficult to measure (and ignored in many academic benchmarks).

What is worse, the cards need to be scanned later (usually latest at the next evacuation pause). While the scanning can sometimes be done by idle processors in a multiprocessor (or multicore) system, as applications evolve to better utilize multiple processors, there may not be any idle processors during lengthy compute-intensive operations. Thus, card scanning must be counted in the write barrier overhead.

A further, but more subtle issue is that card scanning requires that it must be possible to determine which memory locations contain pointers within the card. In general purpose computers without special tag bits, this imposes restrictions on how object layouts must be designed, at which addresses (alignment) objects can be allocated and/or may require special bookkeeping for each card.

Applications vary greatly in their write patterns. Some applications make very few writes to non-young objects; some write many times to relatively few non-young locations; and some write to millions and millions of locations all around the heap.

It is desirable to avoid the TLB misses, cache contention and card scanning overhead that are inherent in a card marking scheme. It would also be desirable to eliminate the duplicate entries for the same addresses and/or the requirement for a separate buffer processing step (that relies on the availability of idle processing cores) that are common when using sequential store buffers with remembered sets.

Some known systems maintain remembered sets as a hash table, and access the remembered set hash tables directly from the write barrier, without the use of a remembered set buffer. Such systems have been found to have poorer performance in Antony L. Hosking et al: A Comparative Performance Evaluation of Write Barrier Implementations, OOPSLA'92, pp. 92-109, ACM, 1992 (they call it the Remembered Sets alternative). They also discuss the implementation of remembered sets as circular hash tables using linear probing on pages 95-96. It should be noted that they are discussing how their remembered sets are implemented; their write barrier (pp. 96-98) does not appear to be based on a hash table and they do not seem to implement a write barrier buffer as a hash table. The remembered sets are usually much larger than a write barrier buffer, and thus accessing remembered sets directly from the write barrier results in poorer cache locality and TLB miss rate compared to using a write barrier buffer, in part explaining the poor benchmark results for their hash table based remembered set approach.

It should be noted that the remembered set data structures and the write barrier buffer are two different things and they perform different functions. The write barrier buffer collects information into a relatively small data structure as quickly as possible, and is typically emptied latest at the next evacuation pause, whereas the remembered sets can be very large on a large system and are slowly changing data, and most of the data in remembered sets lives across many evacuation pauses, often through the entire run of the application.

H. Azatchi et al: An On-the-Fly Mark and Sweep Garbage Collector Based on Sliding Views, OOPSLA'03, pp. 269-281, ACM, 2003 describes using a dirty flag and a LogPointer field in objects for tracking which objects' original values have already been recorded for, eliminating most duplicate copying and providing fast access to original values of written pointer fields. A thread-local linear log data structure is used for storing the original versions of modified objects.

F. Pizlo et al: STOPLESS: A Real-Time Garbage Collector for Multiprocessors, ISMM'07, pp. 159-172, ACM, 2007 uses a write barrier that may expand an object into a special wide format, storing a forwarding pointer at the original object and using a read barrier for following the forwarding pointer when necessary.

Multiplicative hash functions, open addressing hash tables, and linear probing are described in D. Knuth: The Art of Computer Programming: Sorting and Searching, Addison-Wesley, 1973, pp. 506-549.

A lock-free hash table based write barrier buffer for large memory multiprocessor garbage collectors was disclosed in the co-owned US patent application 12/353,327. In that disclosure, a global hash table was used for implementing a write barrier buffer. Atomic operations, such as compare-and-swap, were used for implementing synchronization between threads. There, a hash table based write barrier helped reduce the overhead (especially TLB misses) compared to a card marking based write barrier.

Prior art further includes US 2002/0107667 which discloses a method and apparatus for bag-to-set, buffering remembered set. A remembered set is initially maintained as a bag. Then, at evenly spaced intervals over the execution of the computer program (or at other intervals), the bag is transformed into a set. By transforming the bag to a set at various intervals in the program's execution, the user observable pause associated with write barrier code becomes minimal or non-existent. In addition, when a process uses the remembered set, a garbage collector or persistent checkpoint, for instance, the remembered set can be scanned more efficiently.

However, in multiprocessor/multicore computers with many cores, the cost of synchronizing access using atomic operations is rather high compared to the cost of simple instructions and normal memory accesses. This is largely due to the need for the processor to insert a memory barrier at the atomic instruction site. An improved solution would thus be desirable.

The implementation of an efficient write barrier remains an important area of development, particularly for computers with large memories and many processor cores.

### BRIEF SUMMARY OF THE INVENTION:

A write barrier is implemented using thread-local hash table based write barrier buffers. The write barrier, executed by mutator threads, stores addresses of written memory locations or objects in the thread-local hash tables, and during garbage collection, an explicit or implicit union of the addresses in each hash table is used in a manner that is tolerant to an address appearing in more than one hash table.

Multiplicative hash tables, particularly in combination with open addressing and linear probing, make hash table insertions very fast on modern computers that can typically perform a multiplication at each clock cycle for each core (server processors now being available with 12 cores each, with server computers often having 4-32 processors). Therefore, the overhead of hash value and address calculations for a hash table has become almost negligible compared to the cost of memory accesses and especially TLB misses (a trend that is expected to continue in near future).

Contrary to the lock-free approach of US 12/353,327, it is not possible to know which of the old values saved by various threads for the same address is the original value of a cell. A sliding views technique resembling that described by Azatchi et al can be used for obtaining conservative snapshots of the application's memory when using this kind of write barrier buffer.

The techniques of Pizlo et al and Azatchi et al for implementing real-time garbage collection rely on having special space in each object header for use by the garbage collector (e.g., a dirty flag, LogPointer, state, or wide-object pointer). In some embodiments of the present invention it can be used for implementing real-time garbage collection without relying on such extra fields in object headers for use by garbage collection.

The various embodiments of the present invention provide various advantages compared to the prior art:
- the use of costly synchronization primitives (atomic instructions) in the write barrier is entirely avoided (an important benefit over, e.g., a global lock-free hash table, and the techniques of Pizlo et al (2007), Azatchi et al (2003), and Hosking et al (1992))
- cache locality is improved because each thread accesses only its own write barrier buffer, therefore avoiding contention for its cache lines in a multiprocessor environment, and the hash tables are usually much smaller than a card table would be
- scalability to many processor cores may be improved by the write barrier using only thread-local storage
- TLB misses are reduced compared to card marking, as the working set accessed by each thread is much smaller
- memory needed for the card table is saved, because each thread usually writes to only a small fraction of the system's memory
- the present method is better suited than card marking for distributed and persistent object systems that may have very large virtual address spaces, because the card tables could grow prohibitively large in such environments
- object layouts can be smaller since no additional fields are needed in object headers for garbage collection, thus saving memory
- many transactional memory implementations use a hash table to store old and/or new values anyway, and may be able to share the same hash table with the write barrier; and/or
- performance in NUMA (Non-Uniform Memory Architecture) systems is improved, especially if the hash tables reside on the same NUMA node on which the associated thread executes.

Other embodiments not described in this disclosure are also evident to one skilled in the art. Not all embodiments enjoy from all of the mentioned benefits. Some embodiments may enjoy benefits not mentioned herein, and there may be embodiments where the benefits are other than those mentioned herein.

In mobile computing devices, such as smart phones, personal digital assistants (PDAs) and portable translators, reduced write barrier overhead usually translates into lower power consumption, longer battery life, smaller and more lightweight devices, and lower manufacturing costs. In ASICs (Application Specific Integrated Circuits) or specialized processors, the thread-local hash table based write barrier could be implemented directly in processor cores, which would be very straightforward due to the lack of interdependencies or need of synchronization with other cores that are needed in most other solutions.

A first aspect of the invention is a computer usable medium having computer usable program code means embodied therein for causing a computer to perform garbage collection, the computer usable program code means comprising:
- a computer readable program code means for allocating a thread-local write barrier buffer hash table for a thread;
- a computer readable program code means for inserting an address into the thread-local write barrier buffer hash table of the thread executing a write barrier; and
- a computer readable program code means for using the union of the sets of addresses in at least two thread-local write barrier buffer hash tables in a manner that is tolerant to the same address appearing in more than one hash table.

A second aspect of the invention is an apparatus comprising:
- one or more processors;
- a control logic, including an application control logic and a garbage collector control logic;
- more than one thread, threads being executable by at least some of the processors and operating at least in part as specified by the control logic; and
- a heap comprising objects, at least some of which are modified by the threads;
- at least two threads comprising a thread-local write barrier buffer hash table in which at least some writes to the heap by the respective threads are tracked; and
- the garbage collector control logic comprising a union logic configured to use the union of the sets of addresses in the thread-local write barrier buffer hash tables of the threads, wherein the union logic is tolerant to the same address appearing in more than one thread-local write barrier buffer hash table.

A third aspect of the invention is a method of tracking addresses in a garbage collector, comprising:
- allocating a thread-local write barrier buffer hash table for at least two threads;
- for at least two threads, inserting, by a write barrier, an address into the thread-local write barrier buffer hash table of the thread executing the write barrier; and
- using, by a garbage collector, the union of the sets of addresses in the write barrier buffer hash tables in a manner that is tolerant to the same address appearing in more than one hash table.

### BRIEF DESCRIPTION OF THE SEVERAL VIEWS OF THE DRAWING(S):

Fig. 1 illustrates a multiprocessor/multicore computer utilizing several threads of execution and using a hash table based write barrier buffer.
Fig. 2 illustrates using at least two thread-local hash table based write barrier buffers and utilizing their union in garbage collection.
Fig. 3 illustrates a simplified write barrier implementation using a thread-local hash table.

### DETAILED DESCRIPTION OF THE INVENTION:

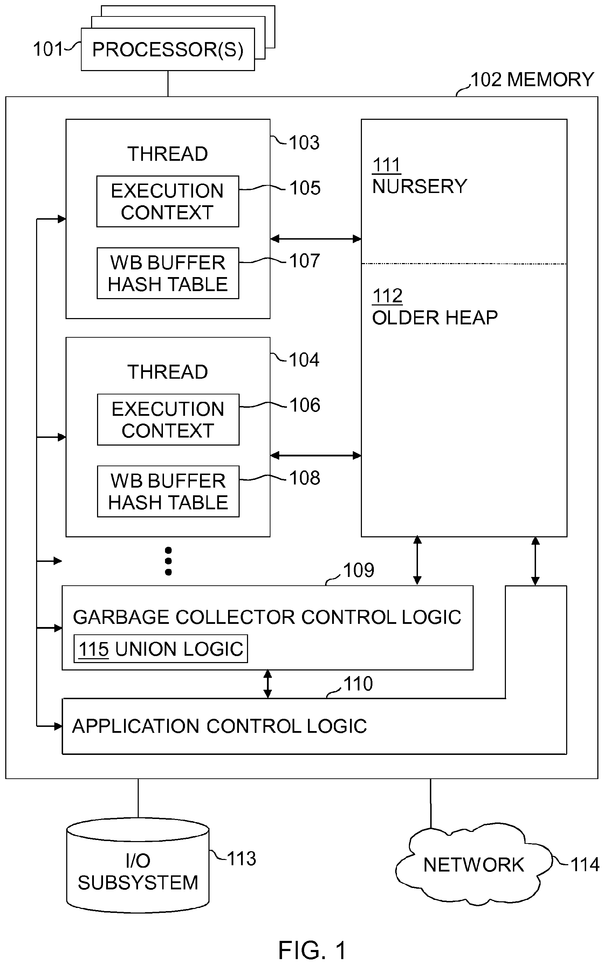

Figure 1 illustrates an apparatus embodiment of the invention. The apparatus comprises one or more processors (101) (which may be separate chips or processor cores on the same chip) and main memory (102), which is in present day computers usually fast random-access semiconductor memory, though other memory technologies may also be used. In most embodiments the main memory consists of one or more memory chips connected to the processors using a bus (a general system bus or one or more dedicated memory buses, possibly via an interconnection fabric between processors), but it could also be integrated on the same chip as the processor(s) and various other components (in some embodiments, all of the components shown in Figure 1 could be within the same chip). (113) illustrates the I/O subsystem of the apparatus, usually comprising non-volatile storage (such as magnetic disk or flash memory devices, display, keyboard, touchscreen, microphone, speaker, camera) and network interface (114), which could be an Ethernet interface, wireless interface (e.g., WLAN, 3G, GSM), cluster interconnect (e.g., 10GigE, InfiniBand(R)). Chip may mean any fabricated system comprising many miniaturized components, not restricted to present day silicon technology.

Threads (103,104) are multiprocessing contexts for the application control logic (110) and the garbage collector control logic (109). Threads may be data structures in memory, and the processor(s) (101) may execute the threads in a time-shared fashion or using dedicated cores for one or more threads. In hardware embodiments, threads may correspond to register sets and other data for hardware-based state machines or processing units. The execution contexts (105,106) represent the low-level execution state (machine registers, stack, etc.).

The write barrier buffer hash tables (107,108) represent thread-local write barrier buffer hash tables. Each thread may comprise one or more thread-local write barrier buffer hash tables. The hash tables may be stored directly in the thread's data structures, or may be separate data structures associated with the thread.

The garbage collector control logic (109) implements garbage collection. Any of a number of known garbage collectors could be used; see the book by Jones & Lins and the other referenced papers. The general implementation of a garbage collector is known to one skilled in the art. (The write barrier may or may not be considered part of the garbage collector.) The garbage collector control logic may be implemented in software (as processor executable instructions or using a virtual machine or interpreter to interpret higher-level instructions) or partly or fully in hardwired digital logic (hardware implementation could be beneficial in portable devices where power consumption is critical).

Part of the garbage collector control logic is the union logic (115), which computes the union of the sets of addresses represented by each thread-local write barrier buffer hash table (the keys of the hash table being viewed as the members of the set of addresses in the hash table). In many embodiments the union is over all thread-local write barrier buffers that have been allocated (and in which addresses have been inserted), but in some embodiments the union could be over a subset of the hash tables.

The union may be computed explicitly or implicitly. In most cases the goal is to make the garbage collector tolerant to the same address appearing in more than one thread-local write barrier buffer hash table. Here tolerant means that no (significant) adverse effect results from the same address appearing in more than one thread-local write barrier buffer hash table. Such tolerance can be achieved by eliminating duplicates before using the set(s) of addresses (explicit computing) or by making the operations that use the addresses tolerant to being invoked for the same address multiple times.

The union may be computed explicitly, constructing a new set containing the union of all addresses in the thread-local write barrier buffer hash tables. The resulting new set would then be used by garbage collection. The computation of the new set and its use could resemble the following:

```
 HashTable new_ht;
 for (HashTable wbht : list_of_write_barrier_buffer_hts)
  for (UInt64 address : keys_of(wbht))
    if (!new_ht.key_in_ht(address))
      new_ht.insert(address);
      for (UInt64 address : keys_of(new_ht))
  action(address);
```

The garbage collector is thus made to tolerate the duplicate addresses by eliminating the duplicates before passing them to the action, and the action thus need not tolerate duplicates. It is straightforward to extend this for embodiments where the old value of the memory location is stored with the address; the iteration would obtain the value in addition to the address from wbht, and would, e.g., maintain a list of the values for each address in insert(), preferably eliminating duplicates from the list.

However, it is expected that in most embodiments the union will be used and computed implicitly. When it is used implicitly, the action is invoked for each address in any of the thread-local write barrier buffer hash tables, possibly invoking it more than once for the same address. The action must thus be constructed in such a way that it tolerates being called multiple times for the same address. It turns out that the most common actions performed on the addresses in garbage collection can be made to tolerate being invoked multiple times for the same address quite easily.

The iteration in the implicit case can be performed as follows (the old value of the memory location indicated by the address is also passed to the action in some embodiments):

```
 for (HashTable wbht : list_of_write_barrier_buffer_hts)
   for (UInt64 address : keys_of(wbht))
     action(address);
```

Many alternatives for the action() operation exist. Some examples and how they can be made to tolerate being invoked for the same address are listed below.

A common action is adding the value (and/or original value) as a potentially live root. If the system maintains a set of roots, cross-region pointers, or, e.g., old-to-young pointers (e.g., using remembered sets structured as hash tables or other index data structures), then duplicates can be eliminated when the address is already found to exist in the data structure. If the system just collects the roots to list or a tracing stack, and then processes them later by some kind of transitive closure or tracing algorithm, it may be sufficient to just add them to the stack, and let the tracking/closure algorithm handle duplicates (such algorithms are designed to handle cyclic data structures, and thus already must contain mechanisms for dealing with multiple pointers to the same value, using, e.g., forwarding pointers).

In some distributed system embodiments, the old or new value of the memory location indicated by the address might refer to an object residing in another node in the distributed system (or on disk in persistent object systems). In such systems, a hash table or some other index structure, or possibly an array, can be used for mapping the value (which might be a global object identifier) to a stub or delegate for the remote object, or for performing pointer swiz-zling where appropriate. Sometimes the object might be requested from the remote node, or the reference reported to the remote node. Here duplicate values might cause some overhead (e.g., repeated lookup), but since the number of duplicates is limited to the number of thread-local write barrier buffer hash tables, which is relatively small, the worst-case overhead is limited.

In some embodiments, the old value might be pushed to the stack of a global tracking or transitive closure computation (or otherwise caused to be (re-)considered by it). Such operations inherently need to handle multiple references to the same object, and are thus (usually) inherently tolerant to duplicate addresses.

In yet other embodiments, such as the Azatchi et al real-time collector, the action might be implementing a snooping mechanism for taking a fuzzy (conservative) snapshot (described as sliding views by Azatchi et al). The action might, for example, mark the object as live (for mark-and-sweep collection) and cause any of its pointers to be traced. Duplicates might be eliminated/tolerated by checking the mark value first, and ignoring the action if the object is already marked.

To implement the sliding view snapshot, threads can first perform soft synchronization to determine the roots (e.g., stack slots, registers, etc.) that each thread has. In soft synchronization, each mutator thread typically calls a function that performs the desired actions, and then continues executing mutator code. After the last thread has synchronized, one or more garbage collector threads perform tracing and other desired garbage collection actions, such as copying. When the operation is complete, threads perform another soft synchronization. Between the synchronizations, each thread tracks the old values of any written locations using thread-local write barrier hash tables, and at the second synchronization, the old values found in the write barrier buffer hash tables are added to the set of roots, the mutator continues, and a garbage collection thread again traces any new roots. This can be repeated, the intervals between synchronizations becoming increasingly small and thus fewer and fewer roots getting added in the hash tables between the synchronizations. When no new roots get added in the interval, the sliding view snapshot is complete (all live objects and possibly some others have been traced). (Other embodiments are clearly also possible.)

With the sliding view approach, the address used as the key in the hash table may advantageously be the address of the object referenced to by the old value (only old values that are pointers are interesting in this case). That is, rather than being a set of written addresses (or mapping from addresses to old values), the write barrier buffer hash table could be a set of addresses derived from the old values of written cells (possibly directly the old values, i.e., derived using the identity function). Typical derivations for the keys of the hash tables (whether derived from old values or addresses of written memory locations) include the identity function or stripping of tag bits, but other derivations are also possible. Old values that are not pointers could advantageously be filtered out and not stored in the hash table.

An advantage of using addresses derived from old values is that it avoids reading the written locations when processing the addresses in the hash tables (reducing memory accesses and TLB misses), and reduces the size of the hash tables because only the key (no value) needs to be stored in them.

In some embodiments the processing of addresses in the thread-local write barrier hash tables may be performed in parallel, for example, using a separate thread for processing each hash table. Particularly in the case of implicit union, the actions may be implemented such that several actions can be performed in parallel as long as they do not use the same address (or, e.g., use addresses in different memory regions). It is also possible to group addresses by, e.g., memory region (possibly already in the write barrier, using a per-region thread-local write barrier buffer hash table), and process each group without any locking or other synchronization primitives, if each group refers to a different region and no synchronization is needed if each thread manipulates a different region.

The application control logic (110) represents an application program or software, but in some embodiments may also be implemented fully or partially in hardware, for example, in order to implement voice recognition functionality with low power consumption. It may be, for example, a Java program (in which case the computer would typically comprise a Java virtual machine), C# program, or a Lisp program.

The control logic of an apparatus includes the garbage collector control logic, application control logic, and various other known components, such as the operating system, virtual machine, interpreter, run-time library, firmware, co-operating applications, and other software or hardware logic components that may be present in a particular embodiment.

The nursery (111) represents the memory area where new objects are allocated. It is often a contiguous area, but in some embodiments may also comprise several memory areas or regions. In many embodiments the write barrier is not used for writes to the nursery; however, in some embodiments (e.g., similar to Azatchi et al) the write barrier may be used to snoop on writes that occur during certain phases of garbage collection, possibly including writes to the nursery.

The older heap (112) contains objects that have survived at least one garbage collection. It may or may not be a contiguous memory area. It represents older generations in generational garbage collection and regions in region-based collectors, such as, Detlefs et al (2004). In other embodiments it may correspond to one or more memory area(s) used for storing objects that have survived at least one garbage collection.

Together, the nursery and the older heap are called the heap. The heap normally contains at least some live objects, i.e., objects that are accessible to the application program or application control logic, and usually also contains some dead objects, or garbage, that are no longer accessible to the application.

An application that utilizes garbage collection typically uses a write barrier to intercept some or all writes to memory locations in its heap. The write barrier comprises instructions that are typically inserted by the compiler before some or all writes (many compilers try to minimize the number of write barriers inserted, and may eliminate the write barrier if they can prove that the write barrier is never needed for a particular write). Some compilers may support a number of specialized write barrier implementations, and may select the most appropriate one for each write.

The write barrier can generally be divided into a fast path and a slow path component. The fast path is executed for every write, whereas the slow path is only executed for writes that actually need to be recorded (usually only a few percent of all writes). Both may be implemented in the same function, but often the fast path is inlined directly where the write occurs, whereas the slow path is implemented using a function call. Some write barrier implementations only consist of a fast path with a few machine instructions, but these barrier implementations tend to have rather limited functionality and are generally not sufficient for large systems.

In many embodiments, application programs comprise many write barrier fast path instantiations. The slow path may be implemented as a function call (or several specialized functions for different types of write barriers). Parts of the write barrier may be implemented in a garbage collector, virtual machine, firmware, or library; however, it could equally well be implemented in each application, in the operating system, or, for example, partially or entirely in hardware (several hardware-based write barrier implementations have been described in the literature).

The slow path of the write barrier usually stores information about writes to the heap in the thread-local write barrier buffer hash table. During evacuation pauses, the thread-local write barrier buffer hash tables are used by the code that implements garbage collection (typically implementing some variant of copying, mark-and-sweep, or reference counting garbage collection). The garbage collector may stop all threads and use the thread-local write barrier buffer hash tables while the (mutator) threads are stopped; alternatively, it might cause each thread to visit synchronization code that moves aside or processes that thread's hash table, possibly performs other work, and then continues. The union logic might then be executed by a separate garbage collection thread running in parallel with mutators.

The garbage collector usually reads information from the hash tables using an iteration means, such as a function for iterating over keys and values in a hash table (most often linearly iterating over all slots in the hash table). In some embodiments the hash table is cleared as it is iterated (basically clearing each slot after reading it).

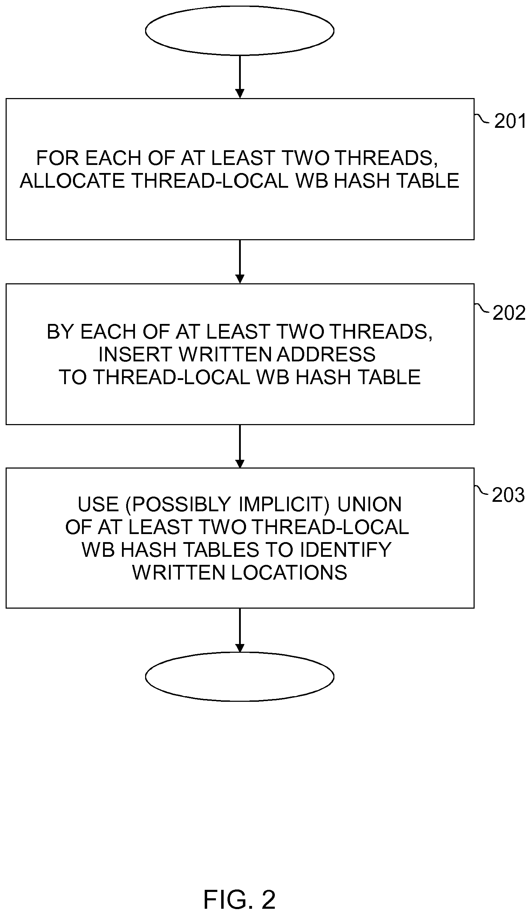

Figure 2 illustrates an embodiment using at least two thread-local write barrier buffer hash tables for storing addresses of written memory locations or objects. Each thread has its own thread-local write barrier buffer hash table. The hash table may be allocated (201) at the end of the previous evacuation pause, when the first address is inserted in it, or at some other suitable time as is evident to one skilled in the art. In some embodiments the hash table may be allocated when the thread context is allocated.

Each of at least two threads then inserts (202) at least one address into its thread-local write barrier buffer hash table from within a write barrier executed by the thread. In many embodiments the number of threads is not limited, and threads typically insert many different addresses into the hash table. For each hash table, each address is preferably inserted only once in the hash table (i.e., no action is taken if the address is already in the hash table).

The inserted addresses may be addresses of written memory locations, or object identifiers (typically the address of an object, often combined with some tag bits).

In some embodiments the old value of the written memory location is stored in the hash table together with the address (as the value of that address, if the hash table is viewed as a mapping from the address to a value). The value would typically be used as the original address of the memory location overwritten by that thread (note that other threads might have modified the memory location before this thread modified it). Such embodiments might be useful for implementing sliding views based conservative snapshotting or tracing (conservative here meaning that at least all values that existed when the snapshot was taken are seen, but other values that were not part of the heap at that time may also be seen; this relates to garbage collection being conservative in the sense that it must never free live data but not all dead objects always need to be detected immediately).

Finally, in (203) the union of at least two thread-local write barrier buffer hash tables is used to identify written locations. The union may be explicitly computed before it is used (thus eliminating any duplicates), or it may be computed implicitly by iterating over values in each hash table, and performing a duplicate-tolerant action on the addresses (for example, adding the address to a remembered set data structure if it is not already there).

It is also possible to use more than one hash table per thread. For example, it would be possible to use a separate hash table for writes to the nursery (if they need to be snooped, e.g., for some real-time collectors) and another one for other writes. In some embodiments a new hash table might be allocated if the previous one becomes too full, rather than enlarging the previous one (enlarging may cause a noticeable pause in the thread's execution in real-time applications). The hash tables could then be, e.g., stored on a list attached to the thread. The write barrier could add the same address in more than one of the hash tables, but this would not be particularly harmful as duplicates must anyway be eliminated when the hash tables from different threads are (implicitly or explicitly) combined. (Another possibility is to search for the address from each of the hash tables on the list before inserting it.) Advantageously, each new hash table could be larger than the previous one (e.g., twice as big).

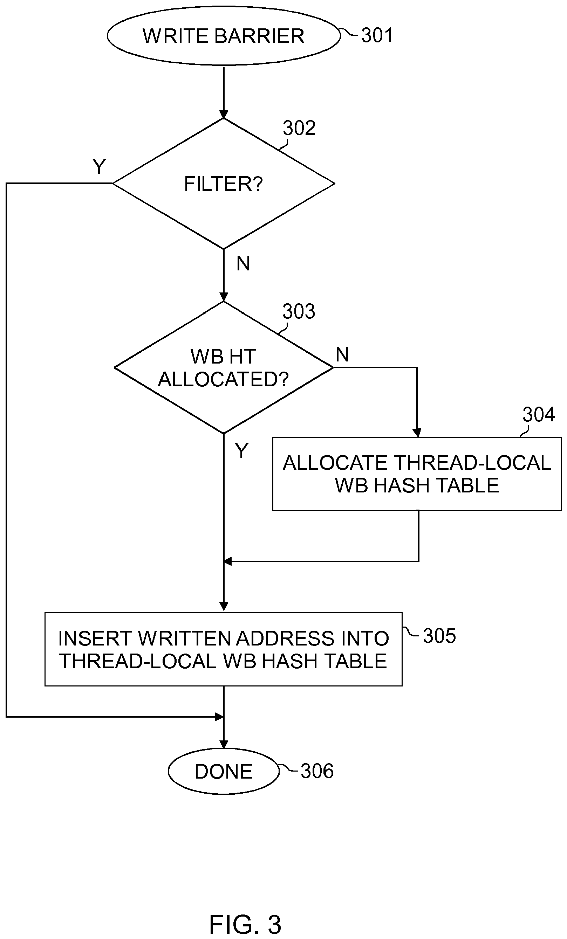

Fig. 3 illustrates an embodiment where the write barrier allocates the thread-local write barrier hash table when an address is first allocated to it. The write barrier is entered at (301). (302) tests if the write should be filtered, i.e., not included in the write barrier buffer. Typically such test would include comparing the written address against the boundaries of nursery or other tests known in the art (e.g., checking the type of the written new value). (303) checks if a write barrier buffer hash table has already been allocated for the thread, and (304) allocates a new hash table if one has not already been allocated. The same test could also be used for allocating a new hash table if the old one becomes too full. (305) inserts the address (and in some embodiments, the old value) to the hash table, using the address (or something computed from it) as the key. In some embodiments the hash table might be expanded if it grows too big. Any known hash table insertion algorithm could be used, and any known variant of a hash table could be used, such as multiplicative open-addressing hash tables with linear probing. In many embodiments if the address already exists in the hash table, nothing is done in this step. (306) marks the end of the insertion. The actual write of the new value is not shown here; it could happen outside the write barrier, or at any point during the execution of the write barrier (or even in parallel with it, especially on a superscalar processor). If the old value is stored in the hash table, it must be read before the new value is written.

Implementation of multiplicative hash tables with linear probing is described in more detail by Knuth and in the referenced prior application relating to a lock-free hash table based write barrier buffer. That application also describes the relation of the write barrier to the rest of the system in more detail (see Fig. 1 therein) and gives guidance on implementing the write barrier slow path (Fig. 2 therein) and fast path (Fig. 4 therein). The fast path could be identical in some embodiments of the present invention; the slow path would preferably operate without atomic instructions.

Using multiplicative hashing with linear probing provides particular advantages over other other types of hash tables in many embodiments. Traditionally, multiplicative hashing has been rather slow because multiplication has been slow. However, modern multi-core processors can perform a multiplication per clock cycle for each core. Thus, in one of the primary target hardware environments of various embodiments of the present embodiment, the multiplicative hash value can be computed particularly fast, e.g., using the formula "hash = (key * constant) >> shiftcount", where the multiplication is modulo a power of two (usually 16, 32, or 64). If the hash table size is a power of two, computing the hash value modulo the hash table size (as is done in many hash table implementations) is eliminated (shiftcount is log2 of size of multiplication (e.g., 32) minus log2 of the size of the hash table (e.g., 10 for 1024-element hash table)). Further, this is advantageously combined with linear probing for resolving hash conflicts (i.e., cases where two different keys hash to the same value). Linear probing basically means that if the computed slot is already in use by another use, the next slot will be used (see Knuth for details). The advantage over other probing mechanisms is that the number of TLB misses and memory bandwidth consumption are reduced when the hash table is large, as the next slot is likely to be on the same page or even on the same cache line. Together their use minimizes latency and processor pipeline stalls in the write barrier, improving the performance of applications.

Nowadays Internet-based servers are a commonly used software distribution medium; with such media, the program code means would be loaded into main memory or local persistent storage using a suitable network protocol, such as the HTTP and various peer-to-peer protocols, rather than, e.g., the SCSI, ATA, SATA, or USB protocols that are commonly used with local storage systems and optical disk drives, or the iSCSI, CFS, or NFS protocols that are commonly used for loading software from media attached to a corporate internal network.

Many variations of the above described embodiments will be available to one skilled in the art. In particular, some operations could be reordered, combined, or interleaved, or executed in parallel, and many of the data structures could be implemented differently. When one element, step, or object is specified, in many cases several elements, steps, or objects could equivalently occur. Steps in flowcharts could be implemented, e.g., as state machine states, logic circuits, or optics in hardware components, as instructions, subprograms, or processes executed by a processor, or a combination of these and other techniques.

It is to be understood that the aspects and embodiments of the invention described in this specification may be used in any combination with each other. Several of the aspects and embodiments may be combined together to form a further embodiment of the invention, and not all features, elements, or characteristics of an embodiment necessarily appear in other embodiments. A method, an apparatus, or a computer program product which is an aspect of the invention may comprise any number of the embodiments or elements of the invention described in this specification. Separate references to "an embodiment" or "one embodiment" refer to particular embodiments or classes of embodiments (possibly different embodiments in each case), not necessarily all possible embodiments of the invention. The subject matter described herein is provided by way of illustration only and should not be construed as limiting.

A pointer or address should be interpreted to mean any reference to an object, such as a memory address, an index into an array of objects, a key into a (possibly weak) hash table containing objects, a global unique identifier, or some other object identifier that can be used to retrieve and/or gain access to the referenced object. In some embodiments pointers may also refer to fields of a larger object.

In this specification, selecting has its ordinary meaning, with the extension that selecting from just one alternative means taking that alternative (i.e., the only possible choice), and selecting from no alternatives either returns a "no selection" indicator (such as a NULL pointer), triggers an error (e.g., a "throw" in Lisp or "exception" in Java), or returns a default value, as is appropriate in each embodiment.

A computer may be any general or special purpose computer, workstation, server, laptop, handheld device, smartphone, wearable computer, embedded computer, a system of computers (e.g., a computer cluster, possibly comprising many racks of computing nodes), distributed computer, computerized control system, processor, ASIC, microchip, or other apparatus capable of performing data processing.

Apparatuses may be computers, but are not restricted to traditional computers. They may also be, for example, robots, vehicles, control systems, instruments, games, toys, or home or office appliances.

Computer-readable media can include, e.g., computer-readable magnetic data storage media (e.g., floppies, disk drives, tapes), computer-readable optical data storage media (disks, tapes, holograms, crystals, strips), semiconductor memories (such as flash memory and various ROM technologies), media accessible through an I/O interface in a computer, media accessible through a network interface in a computer, networked file servers from which at least some of the content can be accessed by another computer, data buffered, cached, or in transit through a computer network, or any other media that can be read by a computer.

## Claims

1. A computer program, **characterized in** comprising code adapted to cause the following when executed on a computer:
- allocating (201) a thread-local write barrier buffer hash table for a thread;
- inserting (202) an address into the thread-local write barrier buffer hash table of the thread executing a write barrier; and
- using (203) a union of the sets of addresses in at least two thread-local write barrier buffer hash tables in a manner that is tolerant to the same address appearing in more than one hash table,
wherein the union of the sets of addresses is computed explicitly by eliminating duplicate addresses or implicitly by iterating over values in each of the write barrier buffer hash tables.

2. The computer program of claim 1, wherein using the union comprises iterating over at least two of the sets, and performing a garbage collection related action for each address therein, said action being tolerant to being invoked for the same address more than once.

3. The computer program of any of the claims 1-2, wherein at least one thread-local write barrier buffer hash table is implemented using multiplicative hashing and linear probing.

4. An apparatus comprising:
- one or more processors (101);
- a control logic, including an application control logic (110) and a garbage collector control logic (109);
- more than one thread (103, 104), the threads being executable by at least some of the processors (101) and operating at least in part as specified by the control logic; and
- a heap comprising objects, at least some of which are modified by the threads;
**characterized in that**:
- at least two of the threads (103, 104) each comprise a thread-local write barrier buffer hash table (107, 108) in which at least some writes to the heap by the respective threads are tracked; and
- the garbage collector control logic (109) comprises a union logic (115) configured to use a union of the sets of addresses in the thread-local write barrier buffer hash tables (107, 108) of the threads (103, 104), wherein the union logic (115) is tolerant to the same address appearing in more than one thread-local write barrier buffer hash table (107, 108),
wherein the union logic (115) is configured to compute the union of the sets of addresses explicitly by eliminating duplicate addresses or implicitly by iterating over values in each of the write barrier buffer hash tables.

5. The apparatus of claim 4, wherein the union logic (115) is configured to iterate over at least two said write barrier buffer hash tables (107, 108), performing a garbage collection related action for each address therein, said action being tolerant to being invoked for the same address more than once.

6. The apparatus of any of the claims 4-5, wherein values derived from the addresses of written memory locations are used as keys in at least one of the thread-local write barrier buffer hash tables (107, 108).

7. The apparatus of any of the claims 4-5, wherein values derived from old values of written memory locations are used as keys in at least one of the thread-local write barrier buffer hash tables (107, 108).

8. The apparatus of any of the claims 4-7, wherein at least one thread-local write barrier buffer hash table (107, 108) uses multiplicative hashing and linear probing.

9. A method of tracking addresses in a garbage collector, **characterized in** comprising:
- allocating (201) a thread-local write barrier buffer hash table for each of at least two threads;
- for at least two of the threads, inserting (202), by a write barrier, an address into the thread-local write barrier buffer hash table of the thread executing the write barrier; and
- using (203), by a garbage collector, a union of the sets of addresses in the write barrier buffer hash tables in a manner that is tolerant to the same address appearing in more than one hash table,
wherein the union of the sets of addresses is computed explicitly by eliminating duplicate addresses or implicitly by iterating over values in each of the write barrier buffer hash tables.

10. The method of claim 9, wherein using the union of the sets comprises:
- computing a set representing the union of the sets of addresses in the write barrier buffer hash tables; and
- using that set by the garbage collector.

11. The method of claim 9, wherein using the union of the sets comprises:
- iterating over each of the write barrier buffer hash tables and performing a garbage collection related action for each address therein, said action being tolerant to being invoked for the same address more than once.

12. The method of claim 11, wherein values derived from the addresses of written memory locations are used as keys for at least one of the thread-local write barrier buffer hash tables.

13. The method of claim 11, wherein values derived from old values of written memory locations are used as keys for at least one of the thread-local write barrier buffer hash tables.

## Patentansprüche

1. Computerprogramm, **dadurch gekennzeichnet, dass** es über einen Code verfügt, der angepasst ist, das Folgende zu veranlassen, wenn es auf einem Computer ausgeführt wird:
- Zuweisen (201) einer threadlokalen Schreibsperrpuffer-Hashtabelle für einen Thread;
- Einsetzen (202) einer Adresse in die threadlokale Schreibsperrpuffer-Hashtabelle des eine Schreibsperre ausführenden Threads; und
- Verwenden (203) einer Bindung der Sätze von Adressen in mindestens zwei threadlokalen Schreibsperrpuffer-Hashtabellen in einer Weise, die verträglich ist zu der in mehr als einer Hashtabelle erscheinenden gleichen Adresse,
wobei die Bindung der Sätze von Adressen explizit berechnet wird durch Eliminieren von Doppeladressen oder implizit durch Iterieren über Werte in jeder der Schreibsperrpuffer-Hashtabellen.

2. Computerprogramm nach Anspruch 1, wobei Verwenden der Bindung das Iterieren über mindestens zwei der Sätze und das Durchführen einer die Sammlung wertloser Daten betreffende Maßnahme für jede Adresse darin umfasst, wobei die Maßnahme verträglich ist, um für die gleiche Adresse mehr als einmal aufgerufen zu werden.

3. Computerprogramm nach einem der Ansprüche 1 bis 2, wobei mindestens eine threadlokale Schreibsperrpuffer-Hashtabelle implementiert wird, indem multiplikatives Hashing und lineares Sondieren verwendet wird.

4. Apparat, umfassend:
- einen oder mehrere Prozessoren (101);
- eine Steuerlogik einschließlich einer Anwendungssteuerlogik (110) und einer Steuerlogik (109) des Sammlers wertloser Daten;
- mehr als einen Thread (103, 104), wobei die Threads durch mindestens einige der Prozessoren (101) ausführbar sind und zumindest teilweise wie durch die Steuerlogik festgelegt funktionieren; und
- eine Menge, die Objekte umfasst, von denen zumindest einige durch die Threads modifiziert sind;
**dadurch gekennzeichnet, dass:**
- mindestens zwei der Threads (103, 104) jeweils eine threadlokale Schreibsperrpuffer-Hashtabelle (107, 108) aufweisen, in der mindestens einige Schreiboperationen zu der Menge durch die jeweiligen Threads verfolgt werden; und
- die Steuerlogik (109) des Sammlers wertloser Daten eine Bindungslogik (115) umfasst, die konfiguriert ist, eine Bindung der Sätze von Adressen in den threadlokalen Schreibsperrpuffer-Hashtabellen (107, 108) der Threads (103, 104) zu verwenden, wobei die Bindungslogik (115) zu der gleichen Adresse verträglich ist, die in mehr als einer threadlokalen Schreibsperrpuffer-Hashtabelle (107, 108) erscheint,
wobei die Bindungslogik (115) konfiguriert ist, um die Bindung der Sätze von Adressen explizit zu berechnen durch Eliminieren von Doppeladressen oder implizit durch Iterieren über Werte in jeder der Schreibsperrpuffer-Hashtabellen.

5. Apparat nach Anspruch 4, wobei die Bindungslogik (115) konfiguriert ist, über mindestens zwei Schreibsperrpuffer-Hashtabellen (107, 108) zu iterieren, indem eine die Sammlung wertloser Daten betreffende Maßnahme für jede Adresse darin durchgeführt wird, wobei die Maßnahme verträglich ist, um für die gleiche Adresse mehr als einmal aufgerufen zu werden.

6. Apparat nach einem der Ansprüche 4 bis 5, wobei Werte, die aus den Adressen von geschriebenen Speicherstellen abgeleitet sind, als Codes in mindestens einer der threadlokalen Schreibsperrpuffer-Hashtabellen (107, 108) verwendet werden.

7. Apparat nach einem der Ansprüche 4 bis 5, wobei Werte, die aus alten Werten geschriebener Speicherstellen abgeleitet sind, als Codes in mindestens einer der threadlokalen Schreibsperrpuffer-Hashtabellen (107, 108) verwendet werden.

8. Apparat nach einem der Ansprüche 4 bis 7, wobei mindestens eine threadlokale Schreibsperrpuffer-Hashtabelle (107, 108) multiplikatives Hashing und lineares Sondieren verwendet.

9. Verfahren zum Verfolgen von Adressen in einem Sammler wertloser Daten, **dadurch gekennzeichnet, dass** es umfasst:
- Zuweisen (201) einer threadlokalen Schreibsperrpuffer-Hashtabelle für jeden von mindestens zwei Threads;
- für mindestens zwei der Threads, Einsetzen (202) durch eine Schreibsperre, einer Adresse in die threadlokale Schreibsperrpuffer-Hashtabelle des die Schreibsperre ausführenden Threads; und
- Verwenden (203) durch einen Sammler wertloser Daten einer Bindung der Sätze von Adressen in den Schreibsperrpuffer-Hashtabellen in einer Weise die für die gleiche Adresse verträglich ist, die in mehr als einer Hashtabelle erscheint,
wobei die Bindung der Sätze von Adressen explizit berechnet wird durch Eliminieren von Doppeladressen oder implizit durch Iterieren über Werte in jeder der Schreibsperrpuffer-Hashtabellen.

10. Verfahren nach Anspruch 9, wobei das Verwenden der Bindung der Sätze umfasst:
- Berechnen eines Satzes, der die Bindung der Sätze von Adressen in den Schreibsperrpuffer-Hashtabellen darstellt; und
- Verwenden dieses Satzes durch den Sammler wertloser Daten.

11. Verfahren nach Anspruch 9, wobei das Verwenden der Bindung der Sätze umfasst:
- Iterieren über jede der Schreibsperrpuffer-Hashtabellen und Durchführen einer die Sammlung wertloser Daten betreffende Maßnahme für jede Adresse darin, wobei die Maßnahme verträglich ist, um für die gleiche Adresse mehr als einmal aufgerufen zu werden.

12. Verfahren nach Anspruch 11, wobei Werte, die aus den Adressen geschriebener Speicherstellen abgeleitet sind, als Codes für mindestens eine der threadlokalen Schreibsperrpuffer-Hashtabellen verwendet werden.

13. Verfahren nach Anspruch 11, wobei Werte, die aus alten Werten geschriebener Speicherstellen abgeleitet sind, als Codes für mindestens eine der threadlokalen Schreibsperrpuffer-Haschtabellen verwendet werden.

## Revendications

1. Programme d'ordinateur, **caractérisé en ce qu'**il comprend un code conçu pour, lors de son exécution sur un ordinateur, provoquer les actions suivantes consistant à :
- attribuer (201) une table de hachage de tampon de barrière d'écriture d'une tâche locale d'un fil d'exécution ;
- insérer (202) une adresse dans la table de hachage de tampon de barrière d'écriture de tâche locale d'un fil d'exécution d'une barrière d'écriture ; et
- utiliser (203) une union des ensembles d'adresses d'au moins deux tables de hachage de tampon de barrière d'écriture d'une tâche locale d'une manière tolérant l'apparition de la même adresse dans plus d'une table de hachage,
dans lequel l'union des ensembles d'adresses est calculée explicitement par suppression d'adresses dupliquées, ou implicitement par itération de valeurs dans chacune des tables de hachage de tampon de barrière d'écriture.

2. Programme d'ordinateur selon la revendication 1, dans lequel l'utilisation de l'union comprend l'itération d'au moins deux des ensembles, et l'exécution d'une action associée à une collecte d'informations superflues de chaque adresse qui s'y trouve, ladite action étant tolérante à l'appel, plus d'une fois, de la même adresse.

3. Programme d'ordinateur selon l'une quelconque des revendications 1 et 2, dans lequel au moins une table de hachage de tampon de barrière d'écriture d'une tâche locale est mise en oeuvre au moyen d'un hachage multiplicatif et d'une méthode linéaire.

4. Appareil comprenant :
- un ou plusieurs processeurs (101) ;
- une logique de commande, comprenant une logique de commande d'application (110) et une logique de commande de collecteur d'informations superflues (109) ;
- plus d'un fil (103, 104), les fils pouvant être exécutés par au moins certains des processeurs (101) et exploités au moins en partie, comme spécifié par la logique de commande ; et
- un tas comprenant des objets, dont au moins certains sont modifiés par les fils ;
**caractérisé en ce que** :
- au moins deux des fils (103, 104) comprennent chacun une table de hachage de tampon de barrière d'écriture (107, 108) d'une tâche locale dans laquelle au moins certaines écritures dans le tas par les fils respectifs sont suivies ; et
- la logique de commande de collecteur d'informations superflues (109) comprend une logique d'union (115) configurée pour utiliser une union des ensembles d'adresses des tables de hachage de tampon de barrière d'écriture (107, 108) de tâche locale des fils (103, 104), dans lequel la logique d'union (115) est tolérante à l'apparition de la même adresse dans plus d'une table de hachage de tampon de barrière d'écriture (107, 108) d'une tâche locale,
dans lequel la logique d'union (115) est configurée pour calculer l'union des ensembles d'adresses explicitement par suppression d'adresses dupliquées, ou implicitement par itération de valeurs dans chacune des tables de hachage de tampon de barrière d'écriture.

5. Appareil selon la revendication 4, dans lequel la logique d'union (115) est configurée pour itérer au moins deux desdites tables de hachage de tampon de barrière d'écriture (107, 108), exécuter une action associée à une collecte d'informations superflues de chaque adresse qui s'y trouve, ladite action étant tolérante à l'appel, plus d'une fois, de la même adresse.

6. Appareil selon l'une quelconque des revendications 4 et 5, dans lequel des valeurs dérivées des adresses d'emplacements de mémoire ayant fait l'objet d'une écriture sont utilisées en tant que clés dans au moins l'une des tables de hachage de tampon de barrière d'écriture (107, 108) de tâche locale.

7. Appareil selon l'une quelconque des revendications 4 et 5, dans lequel des valeurs dérivées d'anciennes valeurs d'emplacements de mémoire ayant fait l'objet d'une écriture sont utilisées en tant que clés dans au moins l'une des tables de hachage de tampon de barrière d'écriture (107, 108) de tâche locale.

8. Appareil selon l'une quelconque des revendications 4 à 7, dans lequel au moins une table de hachage de tampon de barrière d'écriture de tâche locale utilise un hachage multiplicatif et une méthode linéaire.

9. Procédé de suivi d'adresses dans un collecteur d'informations superflues, **caractérisé en ce qu'**il consiste à :
- attribuer (201) une table de hachage de tampon de barrière d'écriture de tâche locale à chacun d'au moins deux fils ;
- pour au moins deux des fils, insérer (202), par une barrière d'écriture, une adresse dans la table de hachage de tampon de barrière d'écriture de tâche locale du fil exécutant la barrière d'écriture ; et
- utiliser (203), par un collecteur d'informations superflues, une union des ensembles d'adresses des tables de hachage de tampon de barrière d'écriture d'une manière tolérante à l'apparition de la même adresse dans plus d'une table de hachage,
dans lequel l'union des ensembles d'adresses est calculée explicitement par suppression d'adresses dupliquées, ou implicitement par itération de valeurs dans chacune des tables de hachage de tampon de barrière d'écriture.

10. Procédé selon la revendication 9, dans lequel l'utilisation de l'union des ensembles consiste à :
- calculer un ensemble représentant l'union des ensembles d'adresses des tables de hachage de tampon de barrière d'écriture ; et
- utiliser ledit ensemble par le collecteur d'informations superflues.

11. Procédé selon la revendication 9, dans lequel l'utilisation de l'union des ensembles consiste à :
- itérer chacune des tables de hachage de tampon de barrière d'écriture et exécuter une action associée à une collecte d'informations superflues pour chaque adresse qui s'y trouve, ladite action étant tolérante à un appel, plus d'une fois, de la même adresse.

12. Procédé selon la revendication 11, dans lequel des valeurs dérivées des adresses d'emplacements de mémoire ayant fait l'objet d'une écriture sont utilisées en tant que clés pour au moins l'une des tables de hachage de tampon de barrière d'écriture de tâche locale.

13. Procédé selon la revendication 11, dans lequel des valeurs dérivées d'anciennes valeurs d'emplacements de mémoire ayant fait l'objet d'une écriture sont utilisées en tant que clés pour au moins l'une des tables de hachage de tampon de barrière d'écriture de tâche locale.
